# EUROPÄISCHE PATENTANMELDUNG

(11) **EP 0 667 267 A1**
(43) Veröffentlichungstag der Anmeldung: **16.08.1995**
(21) Anmeldenummer: 95101670.8
(22) Anmeldetag: 08.02.1995
(51) Int. Cl.: B60S 1/48, B60S 1/52

(54) **Scheibenwaschanlage für Kraftfahrzeuge**

(30) Priorität: 11.02.1994 DE 4404409
(71) Anmelder: Max Kammerer GmbH, D-61440 Oberursel (DE)
(72) Erfinder: Schiller, Werner, D-64390 Erzhausen (DE); Nauss, Otfried, D-64331 Weiterstadt (DE)
(74) Vertreter: Eyer, Eckhardt Philipp, Dipl.-Ing.

(57) **Zusammenfassung**

Scheibenwaschanlage für Kraftfahrzeuge, bestehend aus einem Wasserbehälter (1), einer Wasserpumpe (2), einem sich gegebenenfalls verzweigenden Schlauch (3,4,5) mit jeweils einer Spritzdüse (6,7) an dem Ende eines jeden Zweiges (4,5), einem Rückschlagventil zur Verhinderung des Rückflusses des Wassers in den Behälter sowie einem Heizleiter (9), mit dessen Hilfe das in dem Behälter (1), dem Schlauch (3, 4,5) und den Spritzdüsen (6,7) stehende Wasser auf einer über dem Gefrierpunkt liegenden Temperatur gehalten wird, bei dem der Heizleiter (9) in Form einer durchgehenden Schleife in dem das Waschwasser führenden Schlauch (3,4,5) verlegt und zu diesem Zweck an jedem der zu einer Spritzdüse (5,7) führenden Abzweige (10,11) eine Schlaufe (12) gebildet ist, die sich bis in das Innere der Spritzdüse (6,7) erstreckt und dort zum Zwecke der Rückführung innerhalb des Schlauches umgelenkt wird. In der Spritzdüse ist ein den Wasserzuführungskanal umgebender, mit dem Wasserzuführungskanal über seitliche Öffnungen verbundener Ringraum ausgebildet, wobei das Kanalende mittels eines Dichtstopfens verschlossen ist, der auf seiner Außenfläche eine Nut zur Umlenkung des Heizleiters aufweist.

## Beschreibung

Die Erfindung geht aus von einer Scheibenwaschanlage für Kraftfahrzeuge gemäß dem Oberbegriff des Patentanspruches 1.

Bei den bekannten Scheibenwaschanlagen ist die von der Motorpumpe kommende Wasserzuführungsleitung bis zu einem im Motorraum befestigten Rückschlagventil geführt und in der Regel dort zur Bildung der zur den Spritzdüsen führenden Zweige verzweigt, wobei im Falle der Beheizung der Waschanlage in den Behälter ein tauchsiederartiges Heizelement eingebracht und zur Beheizung des Leitungssystems außen am Rückschlagventil ein weiteres Heizelement mit sich parallel zu den Schlauchleitungen in einem gesonderten Kanal des erstreckenden Heizleitern angebracht wird. Die Anordnung ist außerordentlich aufwendig, insbesondere wegen der vielfachen durch die Verzweigungen begründeten Unterbrechungen, die nicht nur wasserseitig eine Vielzahl von Verbindungen sondern auch eine entsprechend große Zahl elektrischer Verbindungen erforderlich machen. Abgesehen von dem hohen Herstellungs- und Montageaufwand stellt diese Vielzahl der Verbindungen auch Ursache für den Ausfall des Heizsystems mit einem entsprechend hohen Reparaturaufwand dar.

Der vorliegenden Erfindung liegt als Aufgabe die Schaffung einer einfach herstell- und montierbaren Scheibenwaschanlage der genannten Art zugrunde.

Diese Aufgabe wird mit einer Scheibenwaschanlage mit den im Patentanspruch 1 wiedergegebenen Merkmalen gelöst.

Durch die Erfindung ist eine beheizbare Scheibenwaschanlage geschaffen, die einfach herstell-und montierbar ist insofern, als besondere Vorkehrungen zur Anbringung einer Beheizung nicht erforderlich sind. So entfällt insbesondere die Notwendigkeit zur Verwendung eines besonderen, einen zusätzlichen Kanal für den Heizleiter aufweisenden Schlauches, es entfallen weiterhin die aufwendigen elektrischen Anschlüsse und Überbrückungen im Bereich der Abzweigungen, die Verlegung des Heizleiters erfolgt vielmehr innerhalb des Schlauches und seiner Abzweigungen, wobei als weiterer wesentlicher Vorteil der Erfindung eine Verlegung bis in die unmittelbare Nachbarschaft der Düsenöffnung erfolgen kann, so daß ein Offenhalten der Düsen auch bei großer Kälte und hoher Fahrgeschwindigkeit gewährleistet werden kann.

Weitere Einzelheiten der in den Patentansprüchen gekennzeichneten Erfindung werden nachstehend anhand der beigefügten Zeichnung erläutert. Es zeigen
Fig. 1 die schematische Darstellung einer beheizten Scheibenwaschanlage
Fig. 2 einen Schnitt durch eine Spritzdüse für die in Fig 1 wiedergegebene Scheibenwaschanlage
Fig. 3 eine Sicht auf eine andere Ausführungsform einer Spritzdüse
Fig. 4 einen Längsschnitt durch die in Fig. 3 wiedergegebene Spritzdüse
Fig. 5 einen Schnitt nach V - V durch Fig. 4

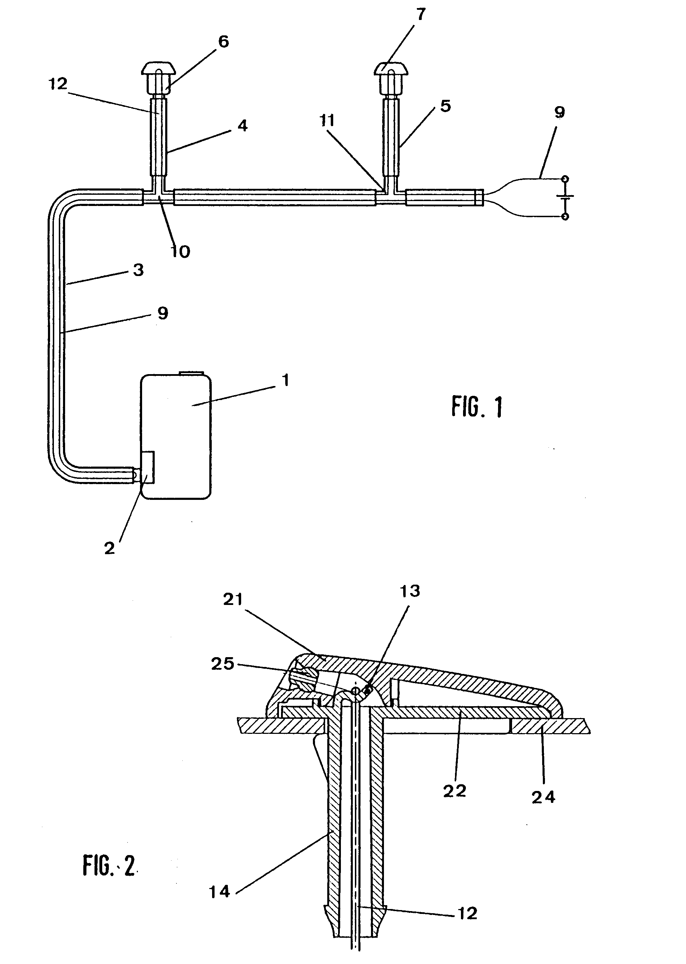

Die in der Zeichnung wiedergegebene Scheibenwaschanlage für Kraftfahrzeuge besteht aus einem Wasserbehälter 1, einer Wasserpumpe 2, einem sich zweifach bis zu jeweils einer Spritzdüse 6, 7 verzweigenden Schlauch 3, 4, 5 sowie einem Heizleiter 9, mit dessen Hilfe das in dem Behälter 1, dem Schlauch 3, 4, 5 und den Spritzdüsen 6, 7 stehende Wasser auf einer über dem Gefrierpunkt liegenden Temperatur gehalten wird. Der Heizleiter 9 ist in Form einer durchgehenden Schleife in dem das Waschwasser führenden Schlauch 3, 4, 5 verlegt, wobei an jedem der zu einer Spritzdüse 6, 7 führenden Abzweige 10, 11 eine Schlaufe 12 gebildet ist, die sich bis in das Innere der Spritzdüse 5, 7 erstreckt und dort zum Zwecke der Rückführung innerhalb des Schlauches umgelenkt ist. Im Falle der in Fig. 2 wiedergegebenen Ausführungsform ist in der Spritzdüse eine Haltenase 13 als Umführung für die Schlaufe 12 des Heizleiters vorgesehen.

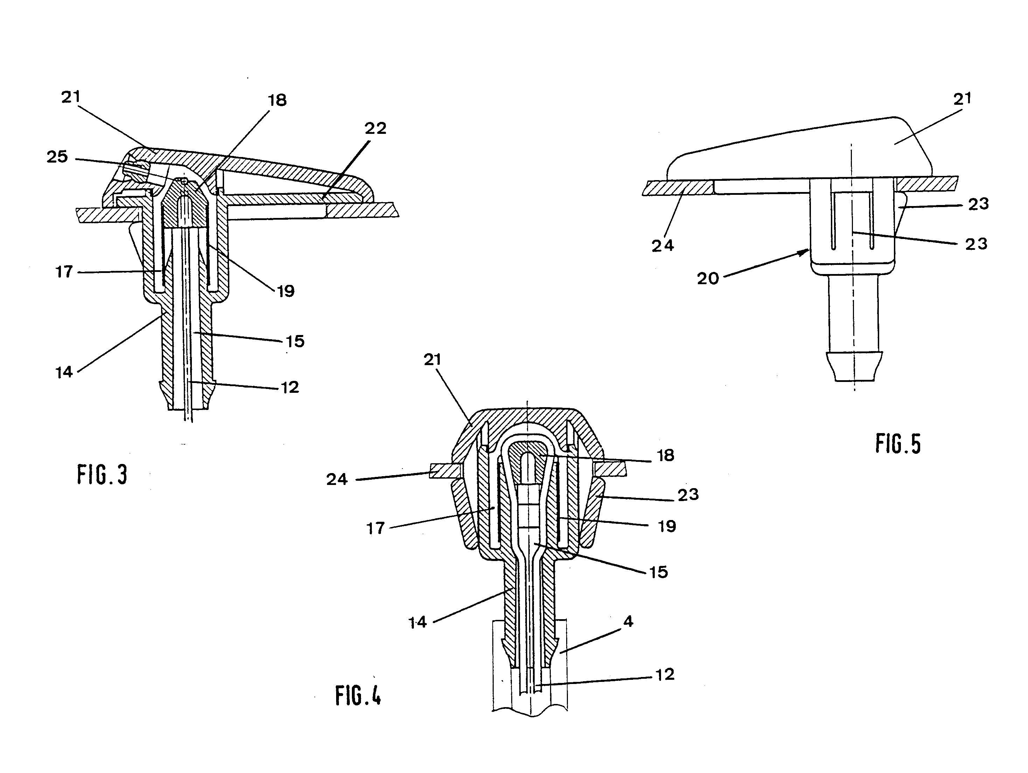

Im Falle der in den Fig. 3 bis 5 wiedergegebenen Ausführungsform ist das Rückschlagventil 19 in der Spritzdüse 5, 7 angeordnet. Sie weist einen gleichzeitig den Wasserführungskanal 15 bildenden Stecknippel 14 zum Einschieben in den das Waschwasser führenden Zuführungsschlauch 4, 5 auf und ist mit einem den Wasserzuführungskanal 15 umgebenden Ringraum 17 auf, der mit dem Wasserzuführungskanal 15 über seitliche Öffnungen 16 verbunden ist. Der Kanal 15 selbst ist an seinem Ende mittels eines Dichtstopfens 18 verschlossen, der auf seiner Außenfläche eine sich in Längsrichtung um den Stopfen erstreckende Nut aufweist, in die das Umlenkende der Schlaufe 12 des Heizleiters 10 eingelegt ist.

Das Rückschlagventil 19 ist gebildet von einem Schlauchstück, das die seitlichen, den Wasserzuführungskanal 15 mit dem Ringraum 17 verbindenden Öffnungen 16 umschließt und an einem Ende, beispielsweise an dem den Dichtstopfen 18 umfasenden Rand fest verklebt ist, während sich das andere unverklebte Ende unter dem Wasserdruck aufweitet und einen Durchlass in den Raum 17 und von dort zur Düsenöffnung 25 freimacht.

Die Spritzdüse ist - siehe insbesondere Fig. 3 - zweiteilig aus einem Sockelteil 20 und einer auf das Sockelteil aufclipsbaren Kappe 21 ausgebildet, wobei das Sockelteil 20 mit einem Flansch 22 und federnden Haltelaschen 23 versehen ist, mit deren Hilfe die Düse durch Klemmhalterung auf das Karosserieblech 24 des Fahrzeuges aufgebracht werden kann.

## Patentansprüche

1. Scheibenwaschanlage für Kraftfahrzeuge, bestehend aus einem Wasserbehälter (1), einer Wasserpumpe (2), einem sich gegebenenfalls verzweigenden Schlauch (3, 4, 5) mit jeweils einer Spritzdüse (6, 7) an dem Ende eines jeden Zweiges (4, 5), einem Rückschlagventil (8) zur Verhinderung des Rückflusses des Wassers in den Behälter sowie einem Heizleiter (9), mit dessen Hilfe das in dem Behälter (1), dem Schlauch (3, 4, 5) und den Spritzdüsen (6, 7) stehende Wasser auf einer über dem Gefrierpunkt liegenden Temperatur gehalten wird, dadurch gekennleichnet, daß der Heizleiter (9) in Form einer durchgehenden Schleife in dem das Waschwasser führenden Schlauch (3, 4, 5) verlegt und zu diesem Zweck an jedem der zu einer Spritzdüse (5, 7) führenden Abzweige (10, 11) eine Schlaufe (12) gebildet ist, die sich bis in das Innere der Spritzdüse (5, 7) erstreckt und dort zum Zwekke der Rückführung innerhalb des Schlauches umgelenkt wird.

2. Scheibenwaschanlage für Kraftfahrzeuge nach Anspruch 1, dadurch gekennzeichnet, daß in der Spritzdüse eine Haltenase (13) als Umführung für die Schlaufe (12) des Heizleiters vorgesehen ist.

3. Scheibenwaschanlage für Kraftfahrzeuge nach Anspruch 1, dadurch gekennzeichnet, daß das Rückschlagventil (9) in der Spritzdüse (5, 7) angeordnet ist.

4. Scheibenwaschanlage für Kraftfahrzeuge nach Anspruch 1 oder 3 mit einer Spritzdüse, die einen gleichzeitig den Wasserführungskanal (15) bildenden Stecknippel (14) zum Einschieben in den das Waschwasser führenden Zuführungsschlauch (4, 5) aufweisenden Düse, dadurch gekennzeichnet, daß in der Spritzdüse (5, 7) ein den Wasserzuführungskanal (15) umgebender, mit dem Wasserzuführungskanal über seitliche Öffnungen (16) verbundener Ringraum (17) ausgebildet und das Kanalende mittels eines Dichtstopfens (18) verschlossen ist, der auf seiner Außenfläche eine Nut zur Umlenkung des Heizleiters (10) aufweist.

5. Scheibenwaschanlage für Kraftfahrzeuge nach Anspruch 3 und 4, dadurch gekennzeichnet, daß die seitlichen, den Wasserzuführungskanal (15) mit dem Ringraum (17) verbindenden Öffnungen (16) mittels eines Schlauch- bzw. Balgventils (19) verschlossen sind, das den von dem Ringraum (17) umschlossenen Teil des Wasserzuführungskanals (15) sowie den Dichtstopfen (18) umfaßt.

6. Scheibenwaschanlage für Kraftfahrzeuge nach einem der Ansprüche 1 bis 5, dadurch gekennzeichnet, daß die Spritzdüse zweiteilig aus einem Sockelteil (20) und einer auf das Sockelteil aufclipsbaren Kappe (21) ausgebildet ist, wobei das Sockelteil (20) mit einem Flansch (22) und federnden Haltelaschen (23) versehen ist, mit deren Hilfe die Düse durch Klemmhalterung auf das Karosserieblech (24) des Fahrzeuges aufgebracht werden kann.
